# EUROPÄISCHE PATENTSCHRIFT

(11) **EP 3 931 087 B1**
(45) Veröffentlichungstag und Bekanntmachung des Hinweises auf die Patenterteilung: **24.09.2025**
(21) Anmeldenummer: 20704503.0
(22) Anmeldetag: 06.02.2020
(51) Int. Cl.: B64U 50/19, B64U 80/86, B64U 101/16, B64U 101/30, G08G 5/25, G08G 5/55, G08G 5/56

(54) **DROHNE SOWIE VERFAHREN ZUR ZIELBEKÄMPFUNG**
DRONE AND METHOD FOR TARGET FIGHTING
DRONE AND MÉTHODE DE COMBAT DE CIBLE

(30) Priorität: 26.02.2019 DE 102019104866
(43) Veröffentlichungstag der Anmeldung: 05.01.2022
(73) Patentinhaber: Rheinmetall Waffe Munition GmbH, 29345 Südheide (DE)
(72) Erfinder: BLACHE, Andreas, 79539 Unterlüß (DE)
(74) Vertreter: DREISS Patentanwälte PartG mbB
(86) Internationale Anmeldenummer: PCT/EP2020/053021
(87) Internationale Veröffentlichungsnummer: WO 2020/173680

(56) Entgegenhaltungen:
- WO-A1-2018/042692
- WO-A1-2018/063076
- CN-A- 105 014 687
- CN-A- 105 314 102
- CN-A- 106 828 932
- CN-A- 107 554 771
- DE-A1- 102017 109 370
- DE-B4- 102015 008 255
- RU-C1- 2 577 831
- RU-C1- 2 628 351
- US-A1- 2018 257 774
- US-B2- 9 127 908

## Beschreibung

Die Erfindung beschäftigt sich mit einer Angriffsdrohne. Die Erfindung betrifft insbesondere eine nicht letale Panzerabwehrdrohne. Die Erfindung zielt darauf ab, mit einem extrem kostengünstigen Effektor, der in unterschiedliche Systeme, wie z.B. eine Drohne, eingebunden werden kann, gegnerische Ziele auszuschalten, kampfunfähig zu machen. Der hierzu notwendige "Mission-Abroad-Kill" wird mit einem Sättigungsangriff erzeugt, der dazu führt, dass insbesondere das Waffenrohr einer Hauptwaffe des gegnerischen Ziels, wie beispielsweise die Waffenanlage eines Kampfpanzers, während der eigenen Schussabgabe beschädigt oder bevorzugt komplett zerstört wird.

Das Schutzniveau von Kampfpanzern wird immer höher. Aktuell wird davon ausgegangen, dass Kampfpanzer, besonders durch die Reaktivmodule wie ,Malachit' oder ,Relikt', Panzerungsäquivalente von bis zu 1m Stahl aufweisen. Des Weiteren kommen immer häufiger aktive Schutzmaßnahmen zum Einsatz. Einhergehend mit einer hohen Anzahl von zur Verfügung stehenden Gefechtsfahrzeugen mit diesem Schutzniveau, ist eine erfolgreiche Bekämpfung solcher Systeme immer komplizierter und schwieriger.

Derzeit eingeführte Panzerabwehrsysteme, wie 105/120mm Panzerwaffen mit konventionellen KE, HL oder HE Munitionen oder Panzerabwehrraketen mit HL - Gefechtsköpfen, gelenkt und/oder ungelenkt, sind nicht immer in der Lage, ein wirksames Ausschalten des Gegners sicher zu gewährleisten. Zudem sind diese Systeme groß, schwer sowie teuer. Systeme wie Panzerabwehrlenkraketen oder Panzerfäuste weisen nämlich als Effektor zumindest einen Gefechtskopf auf, der zur Wirkungsentfaltung Sprengstoff benötigt. Durch den Einsatz von Sprengstoff sind Sicherungssysteme notwendig, um die Handhabungssicherheit bei der Lagerung, dem Transport und im Einsatz zu gewährleisten bzw. zu garantieren.

Aus der US 9,939,239 B1 ist eine Granate bekannt, welche mehrere Stapel-Projektile enthält, die Tri- oder Quad-Copter-Leitschaufeln einsetzen, um sich selbst auf ein Ziel zu steuern. Solche Projektile können Algorithmen in ihren Autopiloten oder Steuerungssysteme programmiert haben, um als Leader-Follower zusammenzuarbeiten, oder Echtzeit-Kamerasysteme, die an einen Benutzer Bilder zurücksenden. Jedes Projektil hat seine eigenen Lenk-, Navigations- und Steuerungskomponenten, Autopiloten, Kameras, Sender, Empfänger, Antennen, Stromquellen, Sensoren, Zünder und oder flexible Schaltkreise. Die Projektile können vorprogrammiert werden, um ein einzelnes Ziel oder mehrere Ziele anzugreifen. Die Projektile können Nutzlasten enthalten, wie Fackeln, Rauchmittel, Fragmente, Mittel zur Erzeugung von Luftstößen, Sprengköpfe, schwebende Überwachungs- / Aufklärungsmittel, Beleuchtungsmittel, Sprengungen und geformte Ladungsnutzlasten.

Die nicht vorveröffentlichte WO 2019/046911 A1 offenbart ein unbemanntes Fahrzeug, das verschossen wird und eine Nutzlast aufnehmen kann. Die Nutzlast kann mindestens einen Sprengstoff, ein Brandmittel, eine Rauchladung, ein nicht handlungsfähiges Mittel und eine Beleuchtungszusammensetzung enthalten. Zudem können tödliche und nicht tödliche Nutzlasten unterstützt werden. Zwei oder mehrere unbemannte Fahrzeuge können mit einem Schwarmmerkmal konfiguriert sein, so dass zwei oder mehrere unbemannte Fahrzeuge autonom oder durch manuelle Eingabe eines Bedieners durch eine Bodenstation an das Ziel zusammengefasst werden, d.h., der Bediener kann das unbemannt Fahrzeug autonom oder durch manuelle Eingabe durch die Bodenstation zum Ziel bzw. Zielbereich steuern. Ein Schwarm kann als ein sich selbst organisierendes Netzwerk von unbemannten Fahrzeugen angesehen werden, in dem sich jedes unbemannte Fahrzeug der Bewegung des anderen bewusst ist, so dass sie sich zusammenballen oder sich massenhaft auf das Ziel zubewegen. Der Schwarm kann auf verschiedene Ziele treffen, wobei sich der Schwarm für bestimmte Angriffe in zahlreiche kleinere Gruppen von unbemannten Fahrzeugen aufteilt. Die Gruppen können sich neu gruppieren, um sich weiter auf andere Ziele einzulassen, oder im Schlachtfeld ruhen, wo sie reaktiviert werden können.

WO 2018/063076 A1 offenbart eine Drohne, die einen Nutzlastträger mit einem freigebbaren Haltemittel zum Ausbringen einer Nutzlast in Form einer Granate aufweist. CN 107 554 771 A offenbart eine Drohne zum Ausbringen von Landminen, wobei mit einem Bohrer ein Loch in die Erde gebohrt wird, eine Mine im Loch abgelegt und das Loch mit einem mit Sand gefüllten Trichter verschlossen wird. CN 105 314 102 A offenbart eine Drohne mit einem an der Unterseite angebrachten mechanischem Arm mit betätigbaren Backen zum Greifen von Gegenständen auf. CN 106 828 932 A offenbart eine Drohne zum Entminen von Kriegsgebieten, wobei Minen mittels Metalldetektoren an der Drohne entdeckt und mittels eines von der Drohne ausbringbaren Zünders zur Detonation gebracht werden können. US 9,127,908 B2 offenbart eine in unterschiedlichen Modi betreibbare Drohne, die ein Fahrzeug erkennen und dies mit einer Sprengladung zur Detonation bringen kann. RU 2 628 351 C1 offenbart eine als Panzerabwehrmine ausgebildete Drohne mit einer Sprengladung. US 2018/0362157 A1 offenbart eine Drohne mit einer modularen Nutzlastschnittstelle, an die bspw. eine Thermitladung als Effektor angekoppelt werden kann. DE 10 2015 008 255 B4 offenbart eine Abwehrdrohne zur Bekämpfung von Kleindrohnen, die an der Unterseite eine Einrichtung zum Abwurf eines Effektors aufweist. WO 2018/042692 A1 offenbart einen Multicopter mit an einem Zentrumsabschnitt befestigten Roboterarmen, die an einem freien Ende jeweils eine Hand aufweisen, die aus zwei zueinander verschwenkbaren Handabschnitten gebildet ist. CN 105 014 687 A zeigt einen Multicopter mit einem Roboterarm, der aus einem Ausleger, einem Arm und einem Halter bzw. einer Hand besteht. US 2018/257774 A1 offenbart eine Drohne mit einem Körper, wobei daran ein Befestigungsmechanismus angekoppelt ist, der aus mehrsegmentigen Griffarmen besteht, mittels denen die Drohne zu Nutzungszwecken bspw. an einem Abschnitt einer Pflanze befestigt werden kann.

Die Erfindung stellt sich die Aufgabe, ein kostengünstiges, möglichst sprengstofffreies aber effektives Angriffssystem aufzuzeigen, das ein gegnerisches Ziel zumindest kampfunfähig macht.

Gelöst wird die Aufgabe durch die Merkmale des Patentanspruchs 1 die Drohne betreffend. Vorteilhafte Ausgestaltungen sind in den Unteransprüchen aufgeführt. Zudem zeigen der Patentanspruch 6 und 7 jeweils ein Verfahren zum Bekämpfen gegnerischer Ziele auf.

Der Erfindung liegt die Idee zugrunde, ein Angriffssystem anzubieten, das ein gegnerisches Ziel dadurch kampfunfähig macht, dass nicht wie gewohnt eine Panzerung des Ziels die Angriffsfläche bietet, sondern eine Waffenanlage des Ziels mit zumindest einem Waffenrohr, die vorzugsweise als Hauptbewaffnung ausgelegt ist.

In Umsetzung dieser Idee ist vorgesehen, zumindest eine Drohne zu verwenden, welche zumindest einen Effektor aufnehmen kann, um die Waffenanlage des gegnerischen Ziels, z.B. eines Kampfpanzers, unbrauchbar zu machen. Unter Drohne wird dabei jedes unbemannte Flugobjekt verstanden, das ferngesteuert und / oder autark sich von einem Ort zu einem anderen Ort bewegen kann. Insbesondere werden Quadrokopter oder Oktokopter oder dergleichen als Drohne angesehen.

Drohnen sind vielfältig und in der Praxis bekannt. Sie unterliegen speziellen Aufgaben. Diese speziellen Aufgaben erfordern ihrerseits einen speziellen Aufbau der einzelnen Drohne. Aus der DE 10 2015 008 256 B4 ist eine Abwehrdrohne zur Abwehr einer Kleindrohne bekannt, die einen Störsender zum Aussenden eines GNSS-Störsignals umfasst. Eine weitere Abwehrdrohne beschreibt die DE 10 2015 008 296 B4. Diese Drohne ist dazu befähigt, eine Kleindrohne automatisch steuern zu können, nachdem die Kleindrohne als solche erkannt wurde. Die DE 10 2015 008 255 B4 offenbart eine Abwehrdrohne, mit zumindest einen Motor zum Antrieb zumindest eines Propellers sowie einen mit dem Motor verbundenen Rumpf. An dem Rumpf ist ein Effektor vorgesehen sowie eine Vorrichtung zum Abwurf des Effektors. Der Effektor umfasst seinerseits Fäden, welche eine andere Kleindrohne an einem Weiterflug hindern soll. Der Effektor besteht aus einer die Fäden umgreifenden Hülle sowie ein in der Hülle aufgenommenes Ausstoßmittel sowie ein Aktivierungsmittel. Eine Abwehrvorrichtung zum Bekämpfen eines unbemannten Luftfahrzeugs beschreibt die DE 10 2014 014 1 17 A1.

Die erfindungsgemäße Drohne soll als Angriffsdrohne wirken. Sie umfasst als Effektor zumindest ein Payload bzw. eine Nutzlast, das / die zumindest eine Beschädigung im oder am Waffenrohr der Waffenanlage hervorruft, spätestens bei einer Schussabgabe. Ein zu verschießendes Geschoss kann nicht mehr problemlos durch das Waffenrohr geführt werden.

Als Nutzlast (Payload) können grundsätzlich Stahlnägel, Glasfragmente etc. vor-gesehen werden. Auch Hohlladungen sind als Nutzlast einsetzbar. Der Effektor besitzt eine die Nutzlast umschließende Hülle.

Die Verwendung von Schneidladungen und/oder pyrotechnischen Ladungen ist bei der beanspruchten Drohne bevorzugt. Die pyrotechnische Ladung sollte in der Lage sein, ein Waffenrohr, d.h. einen Rohrstahl mit ggf. einer Schutzhülle, durchbrennen bzw. aufschmelzen zu können. Dabei handelt es sich bei der pyrotechnischen Ladung für die beanspruchte Drohne erfindungsgemäß um eine Termitladung. Diese erzeugt einen flüssigen Stahl.

In Kombination mit Stahlnägeln kann die pyrotechnische Ladung beispielsweise eine Stahlaufhäufung in das Waffenrohr einschweißen. Zudem sind Magnet-Teflon basierte Ladungen einsetzbar. Diese beispielsweise 2-stufigen Ladungen schmelzen zuerst das Waffenrohr auf. Danach brennt die Termitladung ab, wobei flüssiges Metall in das Waffenrohr gelangt.

Die Drohne ist dazu ausgebildet, den Effektor in/an das gegnerische Ziel zu bringen und dort abzulegen. Die Drohne arbeitet autonom. Die Drohne kann im Falle der autonomen Arbeitsweise selbst zielgenau an das Ziel, beispielsweise an das Waffenrohr einer Waffenanlage eines gegnerischen Ziels verbracht werden. Es versteht sich, dass auch eine Fremdbedienung der Drohnen möglich sein kann. Bevorzugt wird jedoch das autonome Wirken.

Die Drohne weist in der Regel zumindest einen Propeller auf. Bevorzugt besitzt die Drohne wenigstens vier Propeller. Alternative Ausgestaltungen der Drohne sind jedoch möglich und bekannt. Ein Motor dient zum Antrieb des wenigstens einen Propellers. Eine Energieversorgungsquelle, z.B. eine Batterie, kann die für die Funktion der Drohne notwendige Energie liefern.

Die verwendete Drohne ist so ausgebildet, dass sie gegen Jamming, Spoofing, High-Power-Microwafe etc. immun sind, sodass derartige gegnerische Maßnahmen unschädlich für die Drohne sind. Eine Schutzmaßnahme dieser Art zeigt beispielweise die DE 20 2014 003 131 U1. Die Schutzeinrichtung ist zum Schutz eines Flugkörpers gegen Strahlenwaffen ausgelegt.

Jede Drohne verfügt neben einem Speicher zumindest über eine Sensorik, bestehend zumindest aus einer Tagsicht- und/oder Nachtsichtkamera und einer vorzugsweise programmierbaren Freund-/Feind-Bilderkennung. Zudem sollte jede Drohne ein Inertialsystem und/oder GPS-Tracker umfassen, um so eine vorgegebene Route autark (selbstständig) abfliegen zu können. Die EP 2 071 353 A2 offenbart ein derartiges System und Verfahren zum autonomen Tracking eines Flugobjektes. Die Steuerung der Drohne selbst kann mittels satellitengestützte Navigationssysteme oder Waypoint-Navigation erfolgen. Eine derartige Navigation ist beispielsweise aus der US 2004/0193334 A1 bekannt und hier anwendbar.

In einer ersten Variante des Angriffssystems sucht die Drohne unter anderem nach der Rohrmündung des Waffenrohrs eines Ziels (Grobtracking). Das Suchen wird durch entsprechende Sensoren, wie beispielsweise eine Tagsichtkamera, an der jeweiligen Drohne unterstützt. Wird die Rohrmündung erkannt, fliegt die Drohne die Rohrmündung an, um den Effektor in das Waffenrohr zu verbringen. Die Drohne fliegt dann das Ziel vorzugsweise im Feintracking an.

Die einzelne Drohne verfügt über Mittel, die ein Ablegen in das Waffenrohr bzw. die Rohrmündung ermöglichen. In einer bevorzugten Ausführung sind diese Mittel Gelenke, die derart verschwenkt werden können, dass ein zwischen diesen Gelenken befindlicher Effektor in der Rohrmündung abgelegt wird. Das Schwenken der Gelenke kann mechanisch oder elektrisch erfolgen.

In der Rohrmündung befinden sich nunmehr eine Nutzlast, wie z.B. Stahlnägel, Glasfragmente etc. Umfasst der Effektor eine pyrotechnische Ladung, kann beispielsweise das Ablegen in die Rohrmündung bereits zum Auslösen des Effektors, d.h. zum Zünden der pyrotechnischen Ladung, genutzt werden.

Alternativ kann eine Vorrichtung nicht erfindungsgemäß zum Ausstößen bzw. Ausbringen des Effektors vorgesehen werden. Diese Vorrichtung kann ihrerseits mechanisch ausgebildet sein. Eine pyrotechnische Ladung der Vorrichtung kann alternativ den Effektor in die Rohrmündung des Waffenrohrs treiben.

Eine weitere Variante des Angriffssystems besteht darin, den Effektor auf das Waffenrohr abzulegen. Bevorzugt wird jedoch erfindungsgemäß die Möglichkeit, dass sich die Drohne zusammen mit dem Effektor an dem Waffenrohr festklammern kann. Sobald sich die Drohne mit dem Effektor an das gegnerische Ziel, an bzw. auf das Waffenrohr festgesetzt hat, wird der Effektor ausgelöst. Das Auslösen kann unter anderem mechanisch initiiert werden, beispielsweise durch Kontakt mit dem Waffenrohr. Aber auch eine Vorprogrammierung ist denkbar. Als Effektor ist zumindest eine pyrotechnische Ladung vorgesehen. Diese schafft es, das Waffenrohr, d.h. den Rohrstahl mit ggf. einer Schutzhülle, durchzubrennen bzw. aufzuschmelzen. Nach Zündung dieser pyrotechnischen Ladung wird das Waffenrohr somit von außen zumindest aufge- schweißt. Im Ergebnis wird die Innengeometrie des Waffenrohres verändert.

Durch den Effektor in der Rohrmündung oder am Waffenrohr wird erreicht, dass spätestens bei einer Schussabgabe der Durchgang des Geschosses beeinträchtigt wird. Das Geschoss kann nicht mehr problemlos durch das Waffenrohr geführt werden. Dadurch reist das Waffenrohr zumindest auf, bevorzugt sogar ab. Das Ziel wird somit auf dem Gefechtsfeld unbrauchbar. Die Mission muss abgebrochen werden.

Für den Angriff auf zumindest ein Ziel werden vorzugsweise mehrere Drohnen verwendet. Die Drohnen besitzen daher zumindest eine Sende- und Empfangseinrichtung, die auch zur Kommunikation untereinander dient.

Die Drohne bzw. die Drohnen werden in einer besonderen Ausführung mittels eines Containers etc. bevorzugt in die Nähe des Gefechtsfeldes (Zielgebiet) verbracht. Der Container kann ein Stromaggregat umfassen, das aber auch separat mitführbar ist. Zudem sollte der Container mit einer Programmiereinheit versehen sein. Die im Container mitgeführten Drohnen sind ihrerseits über die Programmiereinheit programmierbar.

Bevorzugt weisen die Drohne bzw. die Drohnen keine Landevorrichtungen auf. Das hat den Vorteil, dass die Drohne bzw. die Drohnen ihrerseits bevorzugt in Racks innerhalb des Containers untergebracht werden können. Diese können nahe eines Zielgebietes transportiert werden.

Zudem schafft ein Nichtvorhandensein einer Landevorrichtung an der Drohne Platz für das / die Mittel für das Ablegen des Effektors in das Waffenrohr oder zum Klammern der Drohne bzw. des Effektors an dem Waffenrohr.

Spätestens im Zielgebiet werden die Drohnen über die Programmierschnittstelle am/im Container programmiert. Das kann dadurch erfolgen, dass Daten zur Bilderkennung/Signatur etc. der jeweils zu bekämpfenden Gefechtsfahrzeuge eingegeben werden. Berücksichtigt wird hierbei auch eine Möglichkeit der Freund-/Feind-Kennung. Zudem wird das Suchgebiet, in dem der Gegner (Ziele) erwartet wird, einprogrammiert. Die einzelne Drohne setzt diese Informationen derart um, dass sie eigenständig bzw. selbstständig in das Zielgebiet einfliegen kann (Grobtracking).

In einer bevorzugten Ausführung ist vorgesehen, dass eine Anzahl "n" von Drohnen mit Effektor ausgebracht werden, die sich an der Anzahl der gegnerischen Fahrzeuge mit einer Waffenanlage mit Waffenrohr orientiert. Je nach Voraufklärung kann das Verhältnis der Anzahl der Drohnen zu den gegnerischen Fahrzeugen mindestens 3:1 bis 5:1 betragen. Andere Konstellationen sind aber auch möglich.

Als Schwarm anfliegend suchen die Drohnen entsprechend der einprogrammierten Signatur der gegnerischen Fahrzeuge ihr Ziel selbstständig. Das kann beispielsweise auf eine Distanz von mindestens 3 bis 6 km erfolgen. Die Drohne, die als erstes ein Ziel detektiert hat, meldet diese Information mit den Daten an die anderen Drohnen in ihrer Umgebung weiter, z.B. in Form von GPS-Informationen.

In einer besonders effektiven Ausführungsform des Verfahrens schaltet sich wenigstens eine weitere Drohne auf dieses Ziel mit auf. Die erste Drohne wird zum Master, die zumindest eine weitere Drohne wird zum Slave. Die beiden oder mehrere Drohnen bilden eine Gruppe, die dann das gemeinsame Ziel anfliegt. Für die anderen Drohnen wird dieses Zielgebiet ausgeblendet. Die Drohnen außerhalb der Gruppe suchen ihrerseits weitere Ziele im Zielgebiet ab. Hat eine Drohne ein weiteres Ziel detektiert, meldet die Drohne diese Daten an andere Drohnen in ihrer Umgebung weiter. Die erstdetektierende Drohne wird ihrerseits zum Master, dem sich eine oder mehrere Drohnen als Slave anschließen. So bilden sich immer neue Gruppen für weitere Ziele. Die Drohnen, die weder zum Master noch zum Slave bestimmt wurden, können ihrerseits zum Container zurückfliegen.

Ein Verfahren zur Kommunikation zwischen Drohnen ist beispielsweise der DE 10 2015 006 233 A1 entnehmbar. Auch die DE 10 2014 014 117 A1 zeigt eine Kommunikationsmöglichkeit innerhalb einer Abwehrvorrichtung auf.

Die einzelnen Drohnen können ihrerseits baugleich sein und können mit dem gleichen Effektor ausgerüstet sein. In diesem Fall sind die Mittel für das Ablegen des Effektors in das Waffenrohr oder das Klammern der Drohne an dem Waffenrohr ausgelegt.

Es besteht jedoch die Möglichkeit, dass die Drohnen mit unterschiedliche Effektoren bestückt sein können. Im Falle der unterschiedlichen Nutzlasten kann bei der Gruppenbildung dieses berücksichtigt werden. Dabei schließen sich Drohnen mit einem Effektor, der in der Rohrmündung abgelegt werden soll, mit Drohnen zusammen, die zusammen mit dem Effektor das Waffenrohr von außen umklammern. Die Information über den Aufbau des jeweiligen Effektors ist zwischen den Drohnen kommunizierbar. Diese Variante ermöglicht die Nutzung einfacherer Mittel zum Ausbringen des Effektors oder zum Klammern der Drohne am Waffenrohr.

Vorgeschlagen wird eine Drohne mit zumindest einem Motor mit wenigstens einer Energieversorgung, zumindest einem Propeller und wenigstens einem Effektor. Diese Drohne zeichnet sich dadurch aus, dass der wenigstens eine Effektor zumindest eine Schneidladung und / oder zumindest eine pyrotechnische Ladung in Form einer Termitladung umfasst. Die Drohne verfügt zudem über einen Computer oder Prozessor. Mittels diesem Computer oder Prozessor ist es der Drohne möglich, Entscheidungen treffen zu können, autark einen vorgegebenen Raum abzufliegen. Zudem kann die Drohne mit anderen Drohnen kommunizieren, wozu die Drohne über zumindest eine Sende- und Empfangseinrichtung verfügt.

Ein vorgeschlagenes Verfahren zum Bekämpfen wenigstens eines Ziels mit mindestens einer Drohne umfasst die Schritte des Programmierens der Drohne mit Daten zur Bilderkennung sowie der Eingabe des Suchgebiets, in dem das Ziel erwartet wird. Ein weiterer Schritt ist die Programmierung des Erkennens eines Ziels und Anfliegen des Ziels durch die Drohne, bevorzugt direkt. Die Drohne fliegt dabei eine Rohrmündung zumindest eines Waffenrohrs des Ziels an, wobei die Ausrichtung des Waffenrohres erkannt wird, sodass ein Ablegen des wenigstens einen Effektor in das Waffenrohr erfolgen kann.

Alternativ wird ein weiteres Verfahren zum Bekämpfen wenigstens eines Ziels mit mindestens einer Drohne vorgeschlagen, das ebenfalls die Schritte des Programmierens der Drohne mit Daten zur Bilderkennung umfasst. Ein weiterer Schritt ist auch hierbei die Eingabe des Suchgebiets, in dem das Ziel erwartet wird. Zudem werden der Drohne das Erkennen eines Ziels und das Anfliegen des Ziels einprogrammiert, bevorzugt direkt. Die Drohne fliegt auf ein Waffenrohr des Ziels zu und umklammert das Waffenrohr derart, dass sie sich zumindest an bzw. auf dem Waffenrohr kalten kann. Der wenigstens eine Effektor erreicht dann, dass eine Innengeometrie des Waffenrohres verändert wird, so dass das Waffenrohr selbst unbrauchbar wird und beim Abschuss eines Geschosses beispielsweise zerreißt.

Vorgeschlagen wird ein Abwehrsystem bzw. ein Bekämpfungssystem gegen ein Ziel, das ein geringes Gewicht bei kleinstmöglichem Bauraum aufweist, in der Abwehr bzw. Bekämpfung jedoch hoch effektiv ist.

Anhand eines Ausführungsbeispiels mit Zeichnung soll die Erfindung näher erläutert werden.

Es zeigt:
- Fig. 1: einen Container zur Aufnahme mehrerer Effektoren, geschlossen,
- Fig. 2: den Container aus Fig. 1 in einer geöffneten Ansicht,
- Fig. 3: eine skizzenhafte Darstellung eines Zielgebiets mit Gefechtsfahrzeugen,
- Fig. 4: eine schematische Darstellung des Zielgebiets aus der Sicht eines der Effektoren,
- Fig. 5,6: eine schematische Darstellung eines Effektors in Aktion,
- Fig. 7: eine schematische Darstellung des Ergebnisses.

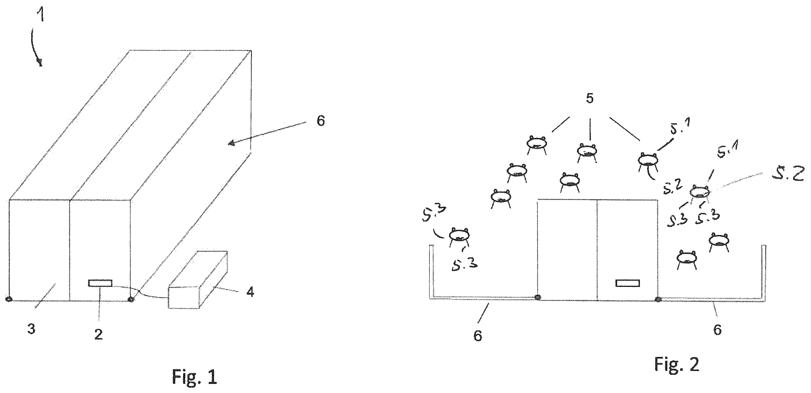

Die Fig. 1 zeigt einen Container 1. Der Container 1 dient hierbei zur Aufnahme von zumindest einem, bevorzugt jedoch von mehreren Drohnen 5. Derartige Drohnen 5 sind kleinbauend und unbemannt. Sie können ferngesteuert werden, können aber auch autark fliegen. Bevorzugt wird hier die autonome bzw. autarke Funktion der Drohne 5. In einem Standardcontainer können bis zu 800 Drohnen 5 (Kleindrohnen) mitgeführt werden.

Der Container 1 weist zumindest eine Programmiereinheit 2 auf, die an einer Containerwand 6 oder an einer Tür 3 etc. angebracht sein kann. Es besteht aber auch die Möglichkeit, ein Interface vorzusehen und die Programmiereinheit 2 innerhalb des Containers 1 anzuordnen. Ein Stromaggregat 4 kann, z.B. als separates Modul, innerhalb des Containers 1 mitgeführt und/oder außerhalb vorgesehen sein. Das separate Mitführen des Stromaggregates 4 hat den Vorteil, dass mehr Räumlichkeiten für die Drohnen 5 zur Verfügung stehen.

Jede Drohne 5 verfügt über zumindest einen Motor (nicht näher dargestellt) und zumindest einen Propeller 5.1, die am bzw. im Rumpf der Drohne 5 angeordnet sind. Bevorzugt sind vier Propeller 5.1 an der Drohne 5 angebracht. Der Motor dient dabei insbesondere zum Antrieb des mindestens einen Propellers 5.1.

Jede der Drohnen 5 umfasst des Weiteren einen Effektor 5.2. Als Nutzlast für den Effektor 5.2 bieten sich grundsätzlich Stahlnägel, Glasfragmente etc. an. Erfindungsgemäß ist für die Drohne 5 die Verwendung Schneidladung und/oder einer pyrotechnischen Ladungin Form einer Termitladung, vorgesehen. In Kombination mit Stahlnägeln, Glasfragmenten, Sand etc. kann dabei die Wirkung am Ziel 8 erhöht werden. Der Effektor 5.2 umfasst vorzugsweise eine Hülle zur Aufnahme der Nutzlast.

Jede Drohne 5 weist eine eigene Intelligenz auf, beispielsweise einen Computer oder Prozessor etc. (nicht näher dargestellt), die es der Drohne 5 ermöglicht, z.B. anhand von abgelegten Vergleichsdaten und/oder Abfragen Entscheidungen zu treffen, mit anderen Drohnen 5 zu kommunizieren und autark einen vorgegebenen Raum abzufliegen. Bevorzugt besitzt jede Drohne 5 des Weiteren eine Tagsicht- und/oder Nachtsichtkamera und eine vorzugsweise programmierbaren Freund-/Feind-Bilderkennung (nicht näher dargestellt). Diese Sensoren sind mit dem Computer verbunden. Jede Drohne 5 verfügt zudem über ein Inertialsystem und/oder GPS-Tracker (nicht näher dargestellt). Die Steuerung der jeweiligen Drohne 5 kann mittels satellitengestützte Navigationssysteme oder Waypoint-Navigation erfolgen. Dadurch kann jede Drohne 5 selbstständig alleine aber auch mit anderen Drohnen 5 arbeiten und kommunizieren. Dazu verfügt die Drohne 5 über zumindest eine Sende- und Empfangseinrichtung. Für die Funktion der Drohne 5 ist zumindest eine Energiequelle in der Drohne 5 vorhanden (nicht näher dargestellt).

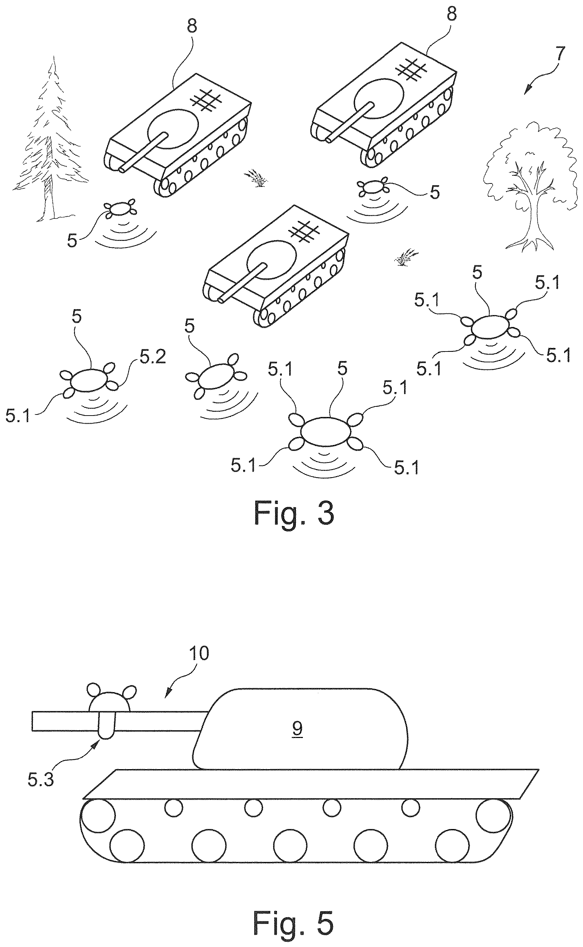

Jede Drohne 5 verfügt zudem über Mittel 5.3. Dieses Mittel 5.3 können Gelenke sein, die einerseits um ca. 90° verschwenkt werden können, anderseits sich an einem Ziel 8, z.B. an einem Waffenrohr 10, festklammern bzw. dieses umfassen können (Fig. 5). Ein Verschwenken des Mittels 5.3 in Flugrichtung ermöglicht das Ablegen des Effektors 5.2 in eine Rohrmündung 10.1 des Waffenrohres 10. Alternativ kann auch eine Vorrichtung Einsatz finden, die den Effektor 5.2 ausstößt, sodass der Effektor 5.2 in der Rohrmündung 10.1 zum Liegen kommt (nicht erfindungsgemäß). Ein Umklammern mit Hilfe der Mittel 5.3 schafft die Möglichkeit, den Effektor 5.2 samt Drohne 5 am Waffenrohr 10 zu befestigen.

Die Funktionsweise der Drohne 5 bzw. mehrerer Drohnen 5 als Angriffsdrohne bzw. Angriffsdrohnen ist wie folgt:
Die Drohnen 5 werden beispielsweise mittels des Containers 1 in ein Zielgebiet 7 bzw. in die Nähe eines Zielgebiets 7 verbracht (Fig. 3). Vorab werden Akkumulatoren der Drohnen 5 aufgeladen (nicht näher dargestellt). Das Aufladen kann aber auch innerhalb des Containers 1 erfolgen. Die Drohnen 5 sind dazu bevorzugt in Racks innerhalb des Containers 1 untergebracht und über die Racks mit dem Stromaggregat 4 elektrisch verbunden.

Im Zielgebiet 7 werden den Drohnen 5 die Daten zur Bilderkennung, wie eine Signatur der jeweils zu bekämpfenden Ziele 8, den Drohnen 5 eingegeben, d.h. einprogrammiert. Dieses kann über die Programmierschnittstelle am/im Container 1 erfolgen. Dabei kann auf eine spezielle Signatur eines gegnerischen Gefechtsfahrzeugs abgestellt werden. Alleiniges Kriterium kann hierbei z.B. eine Freund-/Feinderkennung sein. Zudem wird das Suchgebiet eingegeben, in dem das gegnerische Ziel 8 erwartet wird. Auch diese Programmierung kann über die Programmierschnittstelle am/im Container 1 durchgeführt werden. Das programmierte Suchgebiet kann dabei größer als das Zielgebiet 7 sein. Die Drohne bzw. die Drohnen 5 können ihrerseits mit Hilfe ihres Inertialsystems bzw. GPS-Systems diese eingespeicherte Route autark abfliegen (Grobtracking).

Fig. 2 zeigt den Container 1 aus Fig. 1 im Zielgebiet 7 in einer geöffneten Stellung bzw. Position. Bevorzugt sind die Seitenwände 6 des Containers 1 über Gelenkverbindungen 1.1 seitlich wegschwenkbar. Das ermöglicht den Drohen 5 den Container 1 auf einfache Art und Weise selbstständig verlassen können.

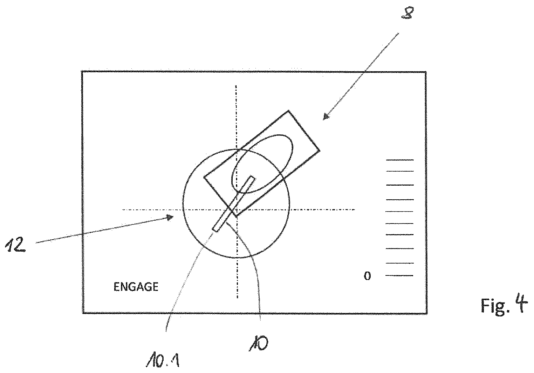

In Fig. 3 näher dargestellt ist das Zielgebiet 7 mit gegnerischen Zielen 8. Die Ziele 8 weisen ihrerseits zumindest eine Waffenanlage 9 mit zumindest einem Waffenrohr 10 auf. Die wenigstens eine ausgeschwärmte Drohne 5 erkennt in einem Umkreis von mehreren Kilometern mit Hilfe der Kamera(s) das Ziel 8 anhand der einprogrammierten Signatur. Nach einer Freund-/Feinderkennung (12 = Sicht der Drohne 5) fliegt die Drohne 5 dieses Ziel 8 bevorzugt direkt an (Fig.4). Dieses direkte Anfliegen erfolgt dann bevorzugt im Feintracking.

In einer ersten Ausführung kann eine Rohrmündung 10.1 des Waffenrohres 10 angeflogen werden. Dazu wird über die Tagsicht- und/oder Nachtsichtkamera die Ausrichtung des Waffenrohres 10 erkannt und die Rohrmündung 10.1 anvisiert. Mittels des Mittels 5.3 wird der Effektor 5.2 in das Waffenrohr 10 abgelegt. Eine Termitladung als Effektor 5.2 würde eine Stahlaufhäufung in das Waffenrohr 10 einschweißen.

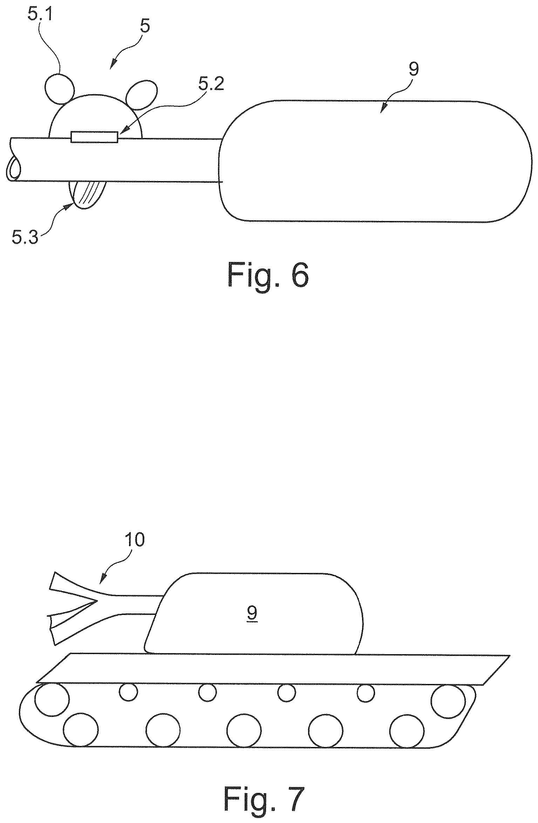

In einer anderen Ausführung fliegt die Drohne 5 auf das Waffenrohr 10 zu. Das Mittel 5.3 der Drohne 5 dient in dieser Ausführung dazu, dass die Drohe 5 das Waffenrohr 10 beispielsweise umklammern kann, zumindest sich jedoch an bzw. auf dem Waffenrohr 10 halten kann (Fig. 5). Die Drohne 5 fliegt, die Orientierung ihres Mittels 5.3 zum Waffenrohr 10 erkennend, auf das Waffenrohr 10 zu und klammert sich mit dem Mittel 5.3 fest. Als Mittel 5.3 können hier Greifer oder Gelenke dienen. Nach dem Festklammern wird der Effektor 5.2, z.B. eine Termitladung, gezündet (Fig. 6), die das Waffenrohr 10 von außen aufschweißt. Dadurch wird die Innengeometrie des Waffenrohrs 10 verändert. Bei einer Schussabgabe wird der Durchgang eines Geschosses (nicht näher dargestellt) so beeinträchtigt, dass das Waffenrohr 10 beispielsweise abreißt (Fig. 7).

Das Auslösen des Effektors 5.2 sollte bevorzugt durch die Drohne 5 selbst erfolgen. Das kann durch eine Programmierung oder anhand eines nicht näher dargestellten Kontaktes an der Drohne 5 erfolgen, der bei Kontakt mit dem Waffenrohr 10 betätigt wird.

In einer bevorzugten Ausführung fliegen mehrere Drohnen 5 in das Zielgebiet 7. Als Schwarm anfliegend suchen die Drohnen 5 aufgrund einer einprogrammierten Signatur der gegnerischen Ziele 8 das Zielgebiet 7 / Suchgebiet selbstständig ab. Das kann auf eine Distanz von mindestens 3 bis 6 km im Umkreis erfolgen. Die Drohne 5, die als erste ein Ziel 8 detektiert, gibt diese Information an andere Drohnen 5 weiter. Diese Drohne 5 wird zur Masterdrohne. Wenigstens 1, bevorzugt mindestens 2 bis n weitere Drohnen 5 folgen dann der sich definierten ersten Masterdrohne zum detektierten Ziel 8. Für die anderen Drohnen 5 im Schwarm wird dieses Ziel 8 ausgeblendet und der Schwarm sucht weitere Ziele 8 im Zielgebiet 7.

Die nächste Drohne 5, die ein neues Ziel 8 erkennt bzw. detektiert, wird beispielsweise zur zweiten Masterdrohne. Auch ihr folgen wenigstens 1, bevorzugt 2 bis n weitere Drohnen 5. Für die verbleibenden Drohnen 5 wird dieses Ziel 8 ausgeblendet.

Die nächste Drohne 5, die dann ein weiteres Ziel 8 detektiert, wird zur n-ten Masterdrohne etc. bis alle Drohnen 5 ein (ihr) Ziel 8 erhalten haben.

Am Ziel 8 wird im Feintracking das Waffenrohr 10 von den Drohnen 5 angeflogen, dieses unbrauchbar gemacht, wie bereits beschrieben.

## Patentansprüche

1. Drohne (5) mit zumindest einem Motor mit wenigstens einer Energieversorgung, zumindest einem Propeller (5.1) und wenigstens einen Effektor (5.2), wobei der wenigstens eine Effektor (5.2) als Nutzlast zumindest eine Schneidladung und/oder zumindest eine pyrotechnische Ladung in Form einer Termitladung umfasst und **dadurch gekennzeichnet, dass** die Drohne (5) Mittel (5.3) zum Ablegen des Effektors (5.2) auf einem Waffenrohr (10) eines Ziels (8) aufweist, wobei die Mittel (5.3) derart eingerichtet sind, dass sich die Drohne (5) zusammen mit dem Effektor (5.2) an dem Waffenrohr (10) des Ziels (8) festklammern kann.

2. Drohne (5) nach Anspruch 1, **dadurch gekennzeichnet, dass** die Drohne (5) einen Computer oder Prozessor aufweist, um Entscheidungen zu treffen, autark einen vorgegebenen Raum abzufliegen und zu kommunizieren, wozu die Drohne (5) über zumindest eine Sende- und Empfangseinrichtung verfügt.

3. Drohne (5) nach einem der Ansprüche 1 bis 2, **dadurch gekennzeichnet, dass** die Drohne (5) zumindest eine Tagsicht- und / oder Nachtsichtkamera umfasst.

4. Drohne (5) nach Anspruch 3, **dadurch gekennzeichnet, dass** die Drohne (5) eine programmierbare Freund-/Feind-Bilderkennung besitzt.

5. Drohne (5) nach einem der Ansprüche 1 bis 4, **dadurch gekennzeichnet, dass** die Drohne (5) zumindest ein Inertialsystem und / oder zumindest einen GPS-Tracker aufweist.

6. Verfahren zum Bekämpfen wenigstens eines Ziels (8) mit mindestens einer Drohne (5), wobei die Drohne (5) ausgestattet ist mit zumindest einem Motor mit wenigstens einer Energieversorgung, zumindest einem Propeller (5.1) und wenigstens einem Effektor (5.2), wobei der wenigstens eine Effektor (5.2) als Nutzlast Stahlnägel und/oder Glasfragmente umfasst und die Drohne (5) Mittel (5.3) zum Ablegen des Effektors (5.2) aufweist, wobei diese Mittel (5.2) als Gelenke ausgebildet sind, die derart verschwenkbar sind, dass der Effektor (5.2), der sich zwischen diesen Gelenken befindet, in der Rohrmündung des Waffenrohrs (10) eines Ziels (8) abgelegen werden kann, wobei das Verfahren die folgenden Schritte beinhaltet:
• Programmieren der Drohne (5) mit Daten zur Bilderkennung und
• Eingabe des Suchgebiets, in dem das Ziel (8) erwartet wird,
• Erkennen eines Ziels (8) und Anfliegen des Ziels (8), bevorzugt direkt, wobei
• eine Rohrmündung (10.1) eines Waffenrohrs (10) des Ziels (8) angeflogen wird,
• Erkennen der Ausrichtung des Waffenrohres (10) und
• Ablegen des wenigstens einen Effektors (5.2) in das Waffenrohr (10).

7. Verfahren zum Bekämpfen wenigstens eines Ziels (8) mit mindestens einer Drohne (5) nach einem der Ansprüche 1 bis 5, **gekennzeichnet durch** folgende Schritte:
• Programmieren der Drohne (5) mit Daten zur Bilderkennung und
• Eingabe des Suchgebiets, in dem das Ziel (8) erwartet wird,
• Erkennen eines Ziels (8) und Anfliegen des Ziels (8), bevorzugt direkt, wobei
• die Drohne (5) auf ein Waffenrohr (10) des Ziels (8) zufliegt und
• die Drohne (5) das Waffenrohr (10) umklammert, zumindest sich an bzw. auf dem Waffenrohr (10) halten kann, und
• der wenigstens eine Effektor (5.2) eine Innengeometrie des Waffenrohres (10) verändert.

8. Verfahren nach Anspruch 6 oder 7, **dadurch gekennzeichnet, dass** mehrere Drohnen (5) in ein Zielgebiet (7) als Schwarm anfliegen, wobei die Drohnen (5) untereinander kommunizieren, derart, dass eine Drohne (5), die als erste ein Ziel (8) detektiert, diese Information an andere der mehreren Drohnen (5) weiter gibt, wodurch diese erstdetektierende Drohne (5) zur Masterdrohne und mindestens eins bis n andere der mehreren Drohnen (5) dieser Masterdrohne als Slave folgen, wobei für die dieser Masterdrohne der nicht folgenden Drohnen (5) dieses Ziel (8) ausgeblendet wird.

9. Verfahren nach Anspruch 8, **dadurch gekennzeichnet, dass** bei Detektion eines neuen Ziels (8) die detektierende Drohne (5) zur zweiten Masterdrohnen wird und diese Information an andere der mehreren Drohnen (5) weiter gibt, wodurch mindestens eins bis n andere der mehreren Drohnen (5) dieser zweiten Masterdrohne als Slave folgen, wobei für die dieser Masterdrohne der nicht folgenden Drohnen (5) dieses Ziel (8) ausgeblendet wird.

10. Verfahren nach Anspruch 8 oder 9, **dadurch gekennzeichnet, dass** bei Detektion weiterer Ziele (8) jeweils n-te Masterdrohnen gebildet und diesen Slave zugeordnet werden, bis die mehreren Drohnen (5) ein Ziel (8) erhalten haben oder die der mehreren Drohnen (5), die weder zur Masterdrohne noch zum Slave bestimmt wurden, zurückfliegen.

11. Verfahren nach einem der Ansprüche 6 bis 10, **dadurch gekennzeichnet, dass** die mindestens eine Drohne (5) bzw. die mehreren Drohnen (5) mittels eines Containers (1) in ein Zielgebiet (7) bzw. in eine Nähe eines Zielgebiets verbracht werden, wobei der Container über eine Programmierschnittstelle und / oder ein Stromaggregat verfügen kann.

## Claims

1. Drone (5) with at least one motor with at least one power supply, at least one propeller (5.1) and at least one effector (5.2), wherein the at least one effector (5.2) comprises as payload at least one cutting charge and/or at least one pyrotechnic charge in the form of a thermite charge and **characterized in that** the drone (5) has means (5.3) for depositing the effector (5.2) on a weapon barrel (10) of a target (8), wherein the means (5.3) are designed such that the drone (5) together with the effector (5.2) can clamp itself to the weapon barrel (10) of the target (8).

2. Drone (5) according to claim 1, **characterized in that** the drone (5) has a computer or processor to make decisions, to autonomously fly over a predetermined space and to communicate, for which purpose the drone (5) has at least one transmitting and receiving device.

3. Drone (5) according to any one of claims 1 to 2, **characterized in that** the drone (5) comprises at least one day vision and/or night vision camera.

4. Drone (5) according to claim 3, **characterized in that** the drone (5) has programmable friend/foe image recognition.

5. Drone (5) according to any one of claims 1 to 4, **characterized in that** the drone (5) has at least one inertial system and/or at least one GPS tracker.

6. Method for attacking at least one target (8) with at least one drone (5), wherein the drone (5) is equipped with at least one motor with at least one power supply, at least one propeller (5.1) and at least one effector (5.2), wherein the at least one effector (5.2) comprises steel nails and/or glass fragments as payload and the drone (5) has means (5.3) for depositing the effector (5.2), wherein these means (5.2) are designed as joints that can be pivoted in such a way that the effector (5.2), which is located between these joints, can be deposited in the muzzle of the weapon barrel (10) of a target (8), wherein the method includes the following steps:
- Programming the drone (5) with data for image recognition and
- Inputting the search area in which the target (8) is expected,
- Detecting a target (8) and flying to the target (8), preferably directly, wherein
- a muzzle (10.1) of a weapon barrel (10) of the target (8) is approached,
- Detecting the alignment of the weapon barrel (10) and
- Placing the at least one effector (5.2) in the weapon barrel (10).

7. Method for attacking at least one target (8) with at least one drone (5) according to any one of claims 1 to 5, **characterized by** the following steps:
- Programming the drone (5) with data for image recognition and
- Inputting the search area in which the target (8) is expected,
- Detecting a target (8) and flying to the target (8), preferably directly, wherein
- the drone (5) flies to a weapon barrel (10) of the target (8) and
- the drone (5) clutches the weapon barrel (10), at least can hold onto or on the weapon barrel (10), and
- the at least one effector (5.2) changes an internal geometry of the weapon barrel (10).

8. Method according to claim 6 or 7, **characterized in that** multiple drones (5) fly into a target area (7) as a swarm, wherein the drones (5) communicate with each other in such a way that a drone (5) which is the first to detect a target (8) passes this information on to others of the multiple drones (5), whereby this first detecting drone (5) becomes the master drone and at least one to n others of the multiple drones (5) follow this master drone as slaves, wherein this target (8) is hidden for the drones (5) which are not following this master drone.

9. Method according to claim 8, **characterized in that** on detecting a new target (8), the detecting drone (5) becomes the second master drone and passes this information on to others of the multiple drones (5), whereby at least one to n others of the multiple drones (5) follow this second master drone as slaves, wherein this target (8) is hidden for the drones (5) which are not following this master drone.

10. Method according to claim 8 or 9, **characterized in that** on detecting further targets (8), respective nth master drones are formed and slaves are assigned to these until the multiple drones (5) have received a target (8) or those of the multiple drones (5) which were designated neither as the master drone nor as the slave fly back.

11. Method according to any one of claims 6 to 10, **characterized in that** the at least one drone (5) or the multiple drones (5) are transferred to a target area (7) or to a vicinity of a target area by means of a container (1), wherein the container may have a programming interface and/or a power unit.

## Revendications

1. Drone (5) avec au moins un moteur avec au moins une alimentation en énergie, au moins une hélice (5.1) et au moins un effecteur (5.2), dans lequel l'au moins un effecteur (5.2) comprend comme charge utile au moins une charge de coupe et/ou au moins une charge pyrotechnique sous forme d'une charge aluminothermique et **caractérisé en ce que** le drone (5) présente des moyens (5.3) pour déposer l'effecteur (5.2) sur un tube d'arme (10) d'une cible (8), dans lequel les moyens (5.3) sont conçus de telle sorte que le drone (5) puisse s'accrocher, conjointement avec l'effecteur (5.2), au tube d'arme (10) de la cible (8).

2. Drone (5) selon la revendication 1, **caractérisé en ce que** le drone (5) présente un ordinateur ou processeur pour prendre des décisions, pour parcourir de manière autonome un espace prédéterminé et pour communiquer, le drone (5) disposant à cet effet d'au moins un dispositif d'émission et de réception.

3. Drone (5) selon l'une quelconque des revendications 1 à 2, **caractérisé en ce que** le drone (5) comprend au moins une caméra à vision diurne et/ou à vision nocturne.

4. Drone (5) selon la revendication 3, **caractérisé en ce que** le drone (5) possède une reconnaissance d'image ami/ennemi programmable.

5. Drone (5) selon l'une quelconque des revendications 1 à 4, **caractérisé en ce que** le drone (5) présente au moins un système inertiel et/ou au moins un traceur GPS.

6. Procédé pour combattre au moins une cible (8) avec au moins un drone (5), dans lequel le drone (5) est équipé d'au moins un moteur avec au moins une alimentation en énergie, d'au moins une hélice (5.1) et d'au moins un effecteur (5.2), dans lequel l'au moins un effecteur (5.2) comprend comme charge utile des clous en acier et/ou des fragments de verre et le drone (5) présente des moyens (5.3) pour déposer l'effecteur (5.2), dans lequel ces moyens (5.2) sont réalisés comme des articulations qui peuvent pivoter de telle sorte que l'effecteur (5.2), qui se trouve entre ces articulations, peut être déposé dans la bouche de tube du tube d'arme (10) d'une cible (8), dans lequel le procédé comprend les étapes suivantes :
• la programmation du drone (5) avec des données de reconnaissance d'image et
• la saisie de la zone de recherche dans laquelle la cible (8) est attendue,
• la reconnaissance d'une cible (8) et l'approche de la cible (8), de préférence directement, dans lequel
• une bouche de tube (10.1) d'un tube d'arme (10) de la cible (8) est approchée,
• la reconnaissance de l'orientation du tube d'arme (10) et
• la dépose de l'au moins un effecteur (5.2) dans le tube d'arme (10).

7. Procédé pour combattre au moins une cible (8) avec au moins un drone (5) selon l'une quelconque des revendications 1 à 5, **caractérisé par** les étapes suivantes :
• la programmation du drone (5) avec des données de reconnaissance d'image et
• la saisie de la zone de recherche dans laquelle la cible (8) est attendue,
• la reconnaissance d'une cible (8) et l'approche de la cible (8), de préférence directement, dans lequel
• le drone (5) se dirige vers un tube d'arme (10) de la cible (8) et
• le drone (5) enserre le tube d'arme (10), au moins peut se tenir au niveau du ou sur le tube d'arme (10), et
• le au moins un effecteur (5.2) modifie une géométrie interne du tube d'arme (10).

8. Procédé selon la revendication 6 ou 7, **caractérisé en ce que** plusieurs drones (5) s'approchent d'une zone cible (7) en essaim, dans lequel les drones (5) communiquent entre eux de telle sorte qu'un drone (5) qui détecte en premier une cible (8) transmet cette information aux autres de la pluralité de drones (5), ce qui fait que ce drone (5) qui détecte en premier devient le drone maître et qu'au moins un à n autres de la pluralité de drones (5) suivent ce drone maître en tant qu'esclaves, dans lequel cette cible (8) est masquée pour les drones (5) ne suivant pas ce drone maître.

9. Procédé selon la revendication 8, **caractérisé en ce que**, lors de la détection d'une nouvelle cible (8), le drone (5) effectuant une détection devient le deuxième drone maître et transmet cette information à d'autres de la pluralité de drones (5), ce qui fait qu'au moins un à n autres de la pluralité de drones (5) suivent ce deuxième drone maître en tant qu'esclaves, dans lequel cette cible (8) est masquée pour les drones (5) ne suivant pas ce drone maître.

10. Procédé selon la revendication 8 ou 9, **caractérisé en ce que**, lors de la détection d'autres cibles (8), respectivement n-ième drones maîtres sont formés et attribués à ces esclaves jusqu'à ce que la pluralité de drones (5) aient reçu une cible (8) ou que ceux de la pluralité de drones (5) qui n'ont été désignés ni comme maître ni comme esclave reviennent en arrière.

11. Procédé selon l'une quelconque des revendications 6 à 10, **caractérisé en ce que** le au moins un drone (5) ou la pluralité de drones (5) sont amenés dans une zone cible (7) ou à proximité d'une zone cible au moyen d'un conteneur (1), dans lequel ledit conteneur peut disposer d'une interface de programmation et/ou d'un groupe électrogène.
